# EUROPÄISCHE PATENTSCHRIFT

(11) **EP 3 359 336 B1**
(45) Veröffentlichungstag und Bekanntmachung des Hinweises auf die Patenterteilung: **14.05.2025**
(21) Anmeldenummer: 16754269.5
(22) Anmeldetag: 18.08.2016
(51) Int. Cl.: B24C 1/00, B24C 3/32, B24C 3/12

(54) **VERFAHREN ZUM REINIGEN MITHILFE VON FESTEM KOHLENSTOFFDIOXID**
METHOD FOR CLEANING USING SOLID CARBON DIOXIDE
PROCÉDÉ DE NETTOYAGE AU MOYEN DE DIOXYDE DE CARBONE SOLIDE

(30) Priorität: 07.10.2015 DE 102015219429
(43) Veröffentlichungstag der Anmeldung: 15.08.2018
(73) Patentinhaber: Bayerische Motoren Werke Aktiengesellschaft, 80809 München (DE)
(72) Erfinder: HELD, Bernd, 80807 München (DE); LANGGAERTNER, Lukas, 80802 München (DE)
(86) Internationale Anmeldenummer: PCT/EP2016/069555
(87) Internationale Veröffentlichungsnummer: WO 2017/059995

(56) Entgegenhaltungen:
- DE-A1- 102004 033 728
- DE-A1- 102004 033 728
- DE-A1- 102007 027 618
- DE-A1- 102012 006 567
- DE-A1- 19 943 005
- DE-A1- 19 943 005
- FR-A1- 2 979 263

## Beschreibung

Die Erfindung betrifft ein Verfahren automatisierten zum Reinigen von Fahrzeugbauteilen mithilfe von festem Kohlenstoffdioxid.

Aus der DE 199 26 119 A1 ist ein Strahlwerkzeug bekannt zur Erzeugung eines Strahles aus CO₂-Schnee mit einer ersten Düse zur Erzeugung eines CO₂-Schnee-Strahles und einer zweiten Düse zur Erzeugung eines Stütz- bzw. Druckstrahles, wobei die zweite Düse die erste Düse umgibt, bei dem die zweite Düse eine Düse zur Erzeugung eines Überschall-Strahles ist. Aus der DE 199 26 119 A1 ist außerdem eine Vorrichtung bekannt zur Behandlung, beispielsweise zur Abreinigung, der Oberfläche eines Objektes, beispielsweise eines Werkstückes oder eines Probentisches, durch Anstrahlen der Oberfläche mit CO₂-Schnee mithilfe eines derartigen Strahlwerkzeugs.

Aus der DE 10 2004 033 728 A1 ist ein Verfahren bekannt zur Bearbeitung einer Klebefläche eines Werkstückes, wobei zumindest die Klebefläche aus einem Metall oder einer Metalllegierung mit einer hydratisierten Oxid- und/oder Hydroxidschicht besteht, bei dem die Klebefläche gereinigt wird, bei dem die Klebefläche aktiviert wird, bei dem die Klebefläche zumindest teilweise mit einem Haftvermittler beschichtet wird und bei dem der Haftvermittler durch eine Nachbehandlung chemisch umgewandelt wird.

Aus der DE 10 2005 002 365 B3 ist ein Strahlverfahren bekannt zur Reinigung von Oberflächen, bei dem in einer Strahlleitung Kohlendioxid einem strömenden Trägergas zugeführt wird und durch Entspannung in Trockenschnee umgewandelt wird, wobei das Kohlendioxid in einem Mischbereich in das Trägergas expandiert wird, in welchem der statische Druck kleiner als 70% des Gesamtdrucks ist. Außerdem ist aus der DE 10 2005 002 365 B3 eine Vorrichtung bekannt zur Erzeugung von Trockeneis, umfassend eine Speiseleitung für Kohlendioxid, eine Zuführleitung für ein Trägergas, eine Strahlleitung für ein Trockenschnee-GasGemisch und einen Mischbereich, in dem das Kohlendioxid in das Trägergas expandiert wird, bei der in dem Mischbereich ein statischer Druck erzeugt wird, der kleiner als 70% des Gesamtdrucks ist.

Die DE 199 43 005 A1 betrifft ein Verfahren zum Reinigen der Oberfläche eines Kunststoffgegenstands zur Vorbehandlung für einen nachfolgenden Beschichtungs-, insbesondere Lackierprozess, bei welchem Verfahren wenigstens ein Arbeitsroboter verwendet wird, an dem wenigstens eine Strahldüse vorgesehen ist, mittels welcher pelletartige Trockeneispartikel auf den Kunststoffgegenstand geblasen werden, wobei die Strahldüse mittels des Arbeitsroboters zum Reinigen eines bestimmten Oberflächenabschnitts automatisch entlang des Kunststoffgegenstands während des Ausblasens bewegt wird. Das Verfahren wird vor allem vor einer Beschichtung großflächiger Kunststoffteile, sie beispielsweise auf dem Automobilsektor in Form von Stoßfängern, Verkleidungsteilen oder dergleichen verwendet werden, angewendet.

Der DE 199 43 005 A1 zufolge wird an einer Aufgabestelle auf Warenträger jeweils ein zu bearbeitender Kunststoffgegenstand aufgegeben. Eine Fördereinrichtung bewegt sich und fördert dabei die Warenträger in einen Arbeitsbereich des Arbeitsroboters. Die Strahldüsen sind direkt auf den Kunststoffgegenstand gerichtet, der Strahlenabstand beträgt ca. 20 cm. Die Beibehaltung dieses Strahlabstandes bezüglich des Kunststoffgegenstandes wird durch die Steuerung der Bewegung des Arbeitsroboters erzielt, welche in Abhängigkeit der Kontur oder Form des Kunststoffgegenstandes erfolgt.

Die DE 10 2004 033 728 A1 betrifft ein Verfahren zur Bearbeitung einer Klebefläche eines Werkstückes aus einem Metall oder einer Metalllegierung mit einer hydratisierten Oxid- und/oder Hydroxidschicht. Der DE 10 2004 033 728 A1 zufolge weist das Verfahren die folgenden Verfahrensschritte auf: Reinigen der Klebefläche, Aktivieren der Klebefläche, Beschichten der Klebefläche zumindest teilweise mit einem Haftvermittler und Nachbehandeln des Haftvermittlers. Eine Vorbehandlung kann auch mechanische durch CO₂-Strahlen erfolgen. Beim CO₂-Strahlen wird ein Strahlmittel aus Festkörperpartikeln mit hoher Geschwindigkeit auf die zu behandelnde Oberfläche gerichtet.Die DE 10 2004 033 728 A1 betrifft ein Verfahren zum Reinigen von Klebeflächen von Fahrzeugbauteilen mithilfe von festem Kohlenstoffdioxid in einer Montagelinie mit mehreren Arbeitsstationen, wobei die Klebeflächen mit hinsichtlich einer erzielbaren Haftkraft, einer Prozesszeit und/oder einer Wirtschaftlichkeit spezifisch angepassten Reinigungsparametern gereinigt werden.

Die DE 10 2007 027 618 A1 betrifft ein Verfahren zur Vorbehandlung von zu lackierenden polymeren Oberflächen von Bauteilen, bei dem wenigstens eine polymere Oberfläche wenigstens eines Bauteils innerhalb einer Vorbehandlungszelle gereinigt wird. Der DE 10 2007 027 618 A1 zufolge erfolgt die Reinigung der Oberfläche meist unter Verwendung von Kohlendioxid-Schnee oder Kohlendioxid-Pellets. Bauteile aus polymeren Substraten, beispielsweise Kunststoffstoßfänger für die Autoindustrie werden nachfolgend üblicherweise in einem Drei-Schicht-Lackaufbau lackiert. Gemäß der DE 10 2007 027 618 A1 umfasst eine Vorrichtung zur Vorbehandlung von zu lackierenden polymeren Oberflächen von Bauteilen eine Vorbehandlungszelle in Form einer Vorbehandlungskabine und eine außerhalb der Vorbehandlungskabine angeordnete Infrarot-Strahlvorrichtung. Das zu reinigende und zu beflammende Bauteil wird über einen Warenträger einer Fördereinrichtung zunächst der Infrarot-Strahlvorrichtung zugeführt. Anschließend erfolgt der Transport des Bauteils über den Warenträger in die Vorbehandlungskabine und zu einer Reinigungsvorrichtung. Hieran schließen sich eine Lageerkennung des Bauteils über eine Vorrichtung zur Lageerkennung und ein Transport des Bauteils zu einer Beflammungsvorrichtung an. Nach der Beflammungsbehandlung wird das Bauteil über den Warenträger dem Lackierprozess zugeführt.

Der Erfindung liegt die Aufgabe zugrunde, ein eingangs genanntes Verfahren zu verbessern.

Die Lösung der Aufgabe erfolgt mit einem Verfahren zum automatisierten Reinigen von Klebeflächen von Fahrzeugbauteilen mithilfe von festem Kohlenstoffdioxid in einer Montagelinie mit mehreren Arbeitsstationen, wobei die Klebeflächen mit hinsichtlich einer erzielbaren Haftkraft, einer Prozesszeit und/oder einer Wirtschaftlichkeit spezifisch angepassten Reinigungsparametern gereinigt werden. Das Verfahren kann ein Strahlverfahren sein. Das Verfahren kann ein Druckluftstrahlverfahren sein. Das feste Kohlenstoffdioxid kann partikelförmig, granulatförmig oder kristallförmig verwendet werden. Das Kohlenstoffdioxid kann in fester Form zugeführt werden. Das Verfahren kann ein Trockeneisstrahlverfahren sein. Das Kohlenstoffdioxid kann zunächst in flüssiger Form zugeführt und nachfolgend verfestigt werden. Das Verfahren kann ein CO₂-Schneestrahlverfahren sein. Das feste Kohlenstoffdioxid (CO2) kann auch als Trockeneis bezeichnet werden.

Feste Kohlenstoffdioxidpartikel können mithilfe von Druckluft beim Durchströmen einer Strahldüse beschleunigt werden. Feste Kohlenstoffdioxidpartikel können mit sehr hoher Geschwindigkeit auf eine zu reinigende Klebefläche auftreffen. Eine zu entfernende Schicht kann lokal unterkühlt und versprödet werden. Nachfolgende Kohlenstoffdioxidpartikel können in Sprödrisse eindringen und beim Auftreffen schlagartig sublimieren. Das Kohlenstoffdioxid kann gasförmig werden und dabei sein Volumen stark vergrößern. Dabei kann es Schmutz von der Klebefläche entfernen.

Klebeflächen von beschichteten und/oder lackierten Fahrzeugbauteilen können gereinigt werden. Klebeflächen von Fahrzeugbauteilen aus einer Metalllegierung, wie Stahl- oder Aluminiumlegierung, und/oder aus einem Faserverbundwerkstoff, wie karbonfaserverstärkter Kunststoff (CFK), können gereinigt werden.

Klebeflächen von Fahrzeugbauteilen werden mit spezifisch angepassten Reinigungsparametern gereinigt. Zum Reinigen von Klebeflächen von Fahrzeugbauteilen werden Reinigungsparameter hinsichtlich einer erzielbaren Haftkraft, einer Prozesszeit und/oder einer Wirtschaftlichkeit angepasst.

Zum spezifischen Anpassen von Reinigungsparametern für Klebeflächen von Fahrzeugbauteilen wird zunächst wechselnd jeweils ein Reinigungsparameter variiert, während die übrigen Reinigungsparameter unverändert bleiben, um jeweils einen optimalen Parameterwert zu ermitteln, und nachfolgend wird eine Kombination von Reinigungsparametern ausgewählt.

Zum Reinigen von Klebeflächen von Fahrzeugbauteilen kann wenigstens einer der folgenden Reinigungsparameter spezifisch angepasst werden: Abstand einer Strahldüse von einer zu reinigenden Klebefläche; Bewegungsgeschwindigkeit einer Strahldüse relativ zu einer zu reinigenden Klebefläche; Massestrom von festem Kohlenstoffdioxid; Druck zur Beschleunigung von festem Kohlenstoffdioxid; Winkel zwischen einer Strahldüse und einer zu reinigenden Klebefläche.

Zum haltekraftoptimierten Reinigen von Klebeflächen von Fahrzeugbauteilen aus einer lackierten Metalllegierung, wie Stahl- oder Aluminiumlegierung, kann ein Abstand einer Strahldüse von einer zu reinigenden Klebefläche frei gewählt werden, eine Strahldüse relativ zu einer zu reinigenden Klebefläche mit einer Geschwindigkeit von ca. 45mm/s bis ca. 55mm/s, insbesondere von ca. 50mm/s, bewegt werden, ein Massestrom von festem Kohlenstoffdioxid von ca. 30kg/h bis ca. 40kg/h, insbesondere von ca. 35kg/h, eingestellt werden, ein Druck zur Beschleunigung von festem Kohlenstoffdioxid von ca. 5bar bis ca. 7bar, insbesondere von ca. 6bar, eingestellt werden und ein Winkel zwischen einer Strahldüse und einer zu reinigenden Klebefläche von ca. 62,5° bis ca. 72,5°, insbesondere von ca. 67,5°, eingestellt werden.

Zum haltekraftoptimierten Reinigen von Klebeflächen von Fahrzeugbauteilen aus einem Faserverbundwerkstoff, wie karbonfaserverstärkter Kunststoff, kann ein Abstand einer Strahldüse von einer zu reinigenden Klebefläche auf ca. 60mm bis ca. 70mm, insbesondere auf ca. 65mm, eingestellt werden, eine Strahldüse relativ zu einer zu reinigenden Klebefläche mit einer Geschwindigkeit von ca. 20mm/s bis ca. 30mm/s, insbesondere von ca. 25mm/s, bewegt werden, ein Massestrom von festem Kohlenstoffdioxid von ca. 15kg/h bis ca. 25kg/h, insbesondere von ca. 20kg/h, eingestellt werden, ein Druck zur Beschleunigung von festem Kohlenstoffdioxid von ca. 3,5bar bis ca. 5,5bar, insbesondere von ca. 4,5bar, eingestellt werden und ein Winkel zwischen einer Strahldüse und einer zu reinigenden Klebefläche von ca. 10° bis ca. 20°, insbesondere von ca. 15°, eingestellt werden.

Zum prozesszeit- und/oder wirtschaftlich optimierten Reinigen von Klebeflächen von Fahrzeugbauteilen aus einer lackierten Metalllegierung, wie Stahl- oder Aluminiumlegierung, kann ein Abstand einer Strahldüse von einer zu reinigenden Klebefläche frei gewählt werden, eine Strahldüse relativ zu einer zu reinigenden Klebefläche mit einer Geschwindigkeit von ca. 70m/s bis ca. 80mm/s, insbesondere von ca. 75mm/s, bewegt werden, ein Massestrom von festem Kohlenstoffdioxid von ca. 10kg/h bis ca. 20kg/h, insbesondere von ca. 15kg/h, eingestellt werden, ein Druck zur Beschleunigung von festem Kohlenstoffdioxid von ca. 5bar bis ca. 7bar, insbesondere von ca. 6bar, eingestellt werden und ein Winkel zwischen einer Strahldüse und einer zu reinigenden Klebefläche von ca. 55° bis ca. 65°, insbesondere von ca. 60°, eingestellt werden.

Zum prozesszeit- und/oder wirtschaftlich optimierten Reinigen von Klebeflächen von Fahrzeugbauteilen aus einem Faserverbundwerkstoff, wie karbonfaserverstärkter Kunststoff, kann ein Abstand einer Strahldüse von einer zu reinigenden Klebefläche auf ca. 60mm bis ca. 70mm, insbesondere auf ca. 65mm, eingestellt werden, eine Strahldüse relativ zu einer zu reinigenden Klebefläche mit einer Geschwindigkeit von ca. 30mm/s bis ca. 40mm/s, insbesondere von ca. 35mm/s, bewegt werden, ein Massestrom von festem Kohlenstoffdioxid von ca. 10kg/h bis ca. 20kg/h, insbesondere von ca. 15kg/h, eingestellt werden, ein Druck zur Beschleunigung von festem Kohlenstoffdioxid von ca. 3,5bar bis ca. 5,5bar, insbesondere von ca. 4,5bar, eingestellt werden und ein Winkel zwischen einer Strahldüse und einer zu reinigenden Klebefläche von ca. 80° bis ca. 90°, insbesondere von ca. 85°, eingestellt werden.

Nach einem Strahlen mit festem Kohlenstoffdioxid können Fahrzeugbauteile von einer elektrostatischen Aufladung befreit werden.

Das Verfahren kann mithilfe einer Vorrichtung durchgeführt werden zum Reinigen von Klebeflächen von Fahrzeugbauteilen mithilfe von festem Kohlenstoffdioxid, wobei die Vorrichtung zum automatisierten Reinigen in einer Montagelinie mit mehreren Arbeitsstationen einen kammerartigen Reinigungsraum für Fahrzeugbauteile, eine Strahleinrichtung mit einer Strahldüse zum Strahlen von festem Kohlenstoffdioxid auf Fahrzeugbauteile, eine Transporteinrichtung zum Transportieren von Fahrzeugbauteilen durch den Reinigungsraum und eine Ladungsableitungseinrichtung zum Beseitigen einer elektrostatischen Aufladung von Fahrzeugbauteilen aufweist.

Die Vorrichtung kann Teil einer Montagelinie mit mehreren Arbeitsstationen sein. Die Vorrichtung kann in der Montagelinie vor einer Arbeitsstation, in der ein Klebeprozess durchgeführt wird, angeordnet sein.

Die Fahrzeugbauteile können Kraftfahrzeugbauteile sein. Die Fahrzeugbauteile können Baugruppen sein. Die Fahrzeugbauteile können Karosserieteile sein. Die Fahrzeugbauteile können Fahrzeugdächer sein. Die Fahrzeugbauteile können zumindest teilweise aus einer Metalllegierung, wie Stahl- oder Aluminiumlegierung, hergestellt sein. Die Fahrzeugbauteile können zumindest teilweise beschichtet und/oder lackiert sein. Die Fahrzeugbauteile können zumindest teilweise aus einem Faserverbundwerkstoff, wie karbonfaserverstärkter Kunststoff, hergestellt sein.

Die Klebeflächen können zum stoffschlüssigen Verbinden der Fahrzeugbauteile mit anderen Fahrzeugbauteilen mithilfe eines Klebstoffs dienen. Das feste Kohlenstoffdioxid (CO₂) kann auch als Trockeneis bezeichnet werden.

Der Reinigungsraum kann Seitenwände aufweisen. Der Reinigungsraum kann eine Decke aufweisen. Der Reinigungsraum kann einen schließbaren Zugang und/oder einen schließbaren Ausgang aufweisen. Der Zugang kann zum Zuführen von Fahrzeugbauteilen in den Reinigungsraum dienen. Der Zugang kann zum Abführen von Fahrzeugbauteilen aus dem Reinigungsraum dienen.

Die Strahleinrichtung kann eine Trockeneisstrahleinrichtung sein. Die Strahleinrichtung kann eine CO₂-Schneestrahleinrichtung sein. Die Strahleinrichtung kann einen Drucklufterzeuger aufweisen. Die Strahleinrichtung kann einen nachfüllbaren und/oder austauschbaren Speicher für festes Kohlenstoffdioxid aufweisen. Die Strahleinrichtung kann einen Verbindungsschlauch zum Verbinden des Drucklufterzeugers mit der Strahldüse aufweisen. Die Strahleinrichtung kann einen Verbindungsschlauch zum Verbinden des Kohlenstoffdioxid-Speichers mit der Strahldüse aufweisen.

Der Reinigungsraum kann zumindest abschnittsweise eine passive Lärmschutzeinrichtung aufweisen. Die Lärmschutzeinrichtung kann Mittel zur Schalldämmung und/oder Schalldämpfung aufweisen. Die Lärmschutzeinrichtung kann an den Seitenwänden und/oder an der Decke angeordnet sein. Der Zugang und/oder der Ausgang des Reinigungsraums können/kann mithilfe eines Rolltors schließbar sein. Ein Rolltor kann ein Schnelllauftor sein.

Die Vorrichtung kann einen Industrieroboter zum automatisierten Führen der Strahldüse aufweisen. Der Industrieroboter kann einen Manipulator, einen Effektor und eine Steuereinrichtung aufweisen. Der Industrieroboter kann zum Reinigen von Klebeflächen von Fahrzeugbauteilen programmierbar sein. Der Effektor kann die Strahldüse aufweisen.

Der Industrieroboter kann kollaborationsfähig sein. Der Industrieroboter kann zur Kollaboration mit einem Werker geeignet sein. Die Vorrichtung kann eine portalartige Trageinrichtung aufweisen. Durch die Trageinrichtung können Fahrzeugbauteile zur Reinigung hindurchführbar sein. Der Industrieroboter kann an der Trageinrichtung angeordnet sein. Der Industrieroboter kann an der Trageinrichtung hängend angeordnet sein.

Die Transporteinrichtung kann Montageträger aufweisen. Die Ladungsableitungseinrichtung kann einen Ionisator aufweisen. Der Ionisator kann in einer Transportrichtung der Strahleinrichtung nachgeordnet sein. Der Ionisator kann im Bereich des Ausgangs des Reinigungsraums angeordnet sein. Der Ionisator kann zur partiellen Ionisierung von Luft dienen. Die Ladungsableitungseinrichtung kann ein Gebläse aufweisen, um ionisierte Luft auf Fahrzeugbauteile zu blasen. Zusammenfassend und mit anderen Worten dargestellt, ergibt sich somit durch die Erfindung unter anderem eine parametrische Qualitätsoptimierung eines Strahlverfahrens mit Trockeneis zur Reinigung von Oberflächen. Klebeflächen, wie zum Beispiel eines Dachausschnitts eines Kraftfahrzeugpanoramadachs, können zunächst durch Trockeneisstrahlen gereinigt werden. Dabei kann ein Reinigungsprozess durch Variation verschiedener Parameter optimiert werden. Diese Parameter können je nach Materialeigenschaft unterschiedlich sein.

Abstand: Ein Abstand einer Düse von einer zu reinigenden Oberfläche. Die Messung des Abstandes kann in mm erfolgen. Geschwindigkeit: Eine Geschwindigkeit, mit welcher sich die Düse über die zu reinigende Oberfläche bewegt. Diese kann in mm/s gemessen werden. Massenstrom: Eine Menge an Trockeneis, welche während eines bestimmten Zeitintervalls zum Reinigen genutzt wird. Dies kann in kg/h gemessen werden. Druck: Ein Druck, mit dem das Trockeneis auf die Oberfläche beschleunigt wird. Dieser kann in bar gemessen werden. Winkel: Ein Winkel zwischen Düse und Oberfläche in Grad.

In diesem Verfahren kann jeweils ein Parameter variiert und anschließend so gewählt werden, dass in einem anschließenden Klebeprozess eine Haftkraft maximal wird. Im Folgenden können die verschiedenen Parameter so gewählt werden, dass sich jeweils eine maximale Haftkraft ergibt. Dabei können diese Werte materialabhängig sein. Beispielsweise können sich für Blech völlig andere Werte und Tendenzen als für CFK ergeben.

Mit der Erfindung wird eine Automatisierbarkeit erleichtert oder ermöglicht. Eine Belastung eines Werkers, insbesondere eine ergonomische Belastung und/oder eine Gesundheitsbelastung durch Lösungs- und/oder Reinigungsmittel, wird reduziert oder entfällt. Ein Aufwand zur Reinigung, insbesondere ein Lösungs- und/oder Reinigungsmittelaufwand und/oder ein Zeitaufwand, wird reduziert. Ein manueller Aufwand wird reduziert oder entfällt. Eine Lärmentwicklung wird reduziert. Eine Verwendung der Vorrichtung zusammen mit Werkern wird ermöglicht. Eine elektrostatische Aufladung wird reduziert oder beseitigt. Ein Messsystem für zu reinigende Klebeflächen kann entfallen. Ein vollautomatisiertes Reinigen mit Trockeneis in geschlossenen Räumen in Karosseriebau und/oder Fahrzeugmontage wird ermöglicht. Eine Reinigungswirkung wird verbessert. Ein Entfernen von Verschmutzungen, insbesondere Hohlraumversiegelungsresten, Fördertechniköl, von Werkern eingetragenen Fetten, Staub, wird verbessert. Eine Reinigungswirkung wird durch Kombination einer mechanischen Reinigung und einer thermischen Reinigung verbessert.

Nachfolgend werden Ausführungsbeispiele der Erfindung unter Bezugnahme auf Figuren näher beschrieben. Aus dieser Beschreibung ergeben sich weitere Merkmale und Vorteile.

Es zeigen schematisch und beispielhaft:
- Fig. 1: eine Vorrichtung zum Reinigen von Klebeflächen von Fahrzeugbauteilen mithilfe von festem Kohlenstoffdioxid in Draufsicht,
- Fig. 2: eine Vorrichtung zum Reinigen von Klebeflächen von Fahrzeugbauteilen mithilfe von festem Kohlenstoffdioxid in eingangsseitiger Ansicht,
- Fig. 3: ein spezifisches Anpassen von Reinigungsparametern für Klebeflächen von Fahrzeugbauteilen aus einer Metalllegierung, wie Stahl- oder Aluminiumlegierung und
- Fig. 4: ein spezifisches Anpassen von Reinigungsparametern für Klebeflächen von Fahrzeugbauteilen aus einem Faserverbundwerkstoff, wie karbonfaserverstärkter Kunststoff.

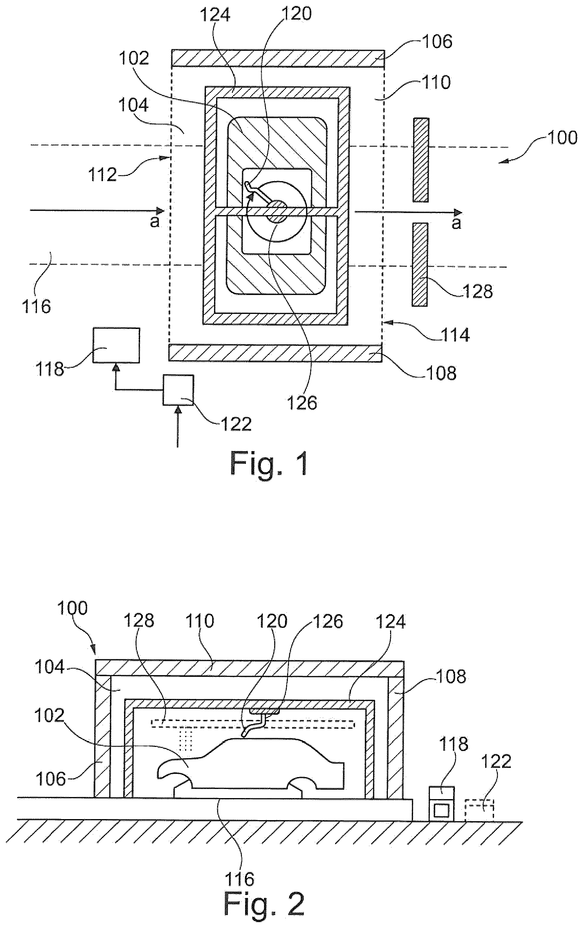

Fig. 1 zeigt eine Vorrichtung 100 zum Reinigen von Klebeflächen von Fahrzeugbauteilen 102 mithilfe von festem Kohlenstoffdioxid in Draufsicht. Fig. 2 zeigt die Vorrichtung in eingangsseitiger Ansicht.

Die Vorrichtung 100 ist Teil einer hier nicht weiter dargestellten Montagelinie mit mehreren Arbeitsstationen. Die Vorrichtung 100 ist in der Montagelinie vor einer Arbeitsstation, in der ein Klebeprozess durchgeführt wird, angeordnet.

Die Fahrzeugbauteile 100 sind vorliegend Fahrzeugkarosserien, die aus einer Metalllegierung, wie Stahl- oder Aluminiumlegierung, oder aus einem Faserverbundwerkstoff, wie karbonfaserverstärkter Kunststoff, hergestellt und zumindest teilweise beschichtet und/oder lackiert sind. Die Fahrzeugkarosserien weisen jeweils einen Dachausschnitt auf, an dessen Rand Klebeflächen angeordnet sind, um in dem Dachausschnitt ein Panoramadach einzukleben.

Die Vorrichtung 100 weist einen kammerartigen Reinigungsraum 104 mit Seitenwänden 106, 108, einer Decke 110, einem Zugang 112 und einem Ausgang 114 auf. Der Zugang 112 und der Ausgang 114 sind jeweils mithilfe eines Schnelllauf-Rolltors schließbar. Der Reinigungsraum 104 weist eine passive Lärmschutzeinrichtung mit Mitteln zur Schalldämmung und/oder Schalldämpfung auf, die an den Seitenwänden 106, 108 und an der Decke 110 angeordnet sind.

Die Vorrichtung 100 weist eine Transporteinrichtung 116 mit einer Fördereinrichtung und Montageträgern zum Transportieren von Fahrzeugbauteilen 102 durch den Reinigungsraum 104 auf. Die Transporteinrichtung 116 dient dazu, die Fahrzeugbauteile 102 durch den Zugang 112 in den Reinigungsraum 104 hinein, durch den Reinigungsraum 104 hindurch und durch den Ausgang 114 aus dem Reinigungsraum 104 heraus zu transportieren.

Die Vorrichtung 100 weist eine Strahleinrichtung 118 mit einer Strahldüse 120 zum Strahlen von festem Kohlenstoffdioxid auf die Fahrzeugbauteile 102 auf. Die Strahleinrichtung 118 ist vorliegend eine Trockeneisstrahleinrichtung. Das Trockeneisstrahlen ist ein Druckluftstrahlverfahren, bei dem als Strahlmittel festes Kohlenstoffdioxid, auch als Trockeneis bezeichnet, mit einer Temperatur von -78,9°C eingesetzt wird. Zum Reinigen werden feste Kohlenstoffdioxidpartikel mithilfe von Druckluft beim Durchströmen der Strahldüse 120 beschleunigt und treffen mit sehr hoher Geschwindigkeit auf eine zu reinigende Klebefläche auf. Dadurch wird die zu entfernende Schicht lokal unterkühlt und versprödet. Nachfolgende Kohlenstoffdioxidpartikel dringen in Sprödrisse ein und sublimieren beim Auftreffen schlagartig. Das Kohlenstoffdioxid wird gasförmig und vergrößert dabei sein Volumen stark. Dabei entfernt es Schmutz von der Klebefläche. Die Strahleinrichtung 118 ist an der Transporteinrichtung 116 angeordnet.

Die Strahleinrichtung 118 weist einen nachfüllbaren und/oder austauschbaren Speicher 122 für festes Kohlenstoffdioxid auf. Der Speicher 122 ist austauschbar, um erneut festes Kohlenstoffdioxid bereit zu stellen. Die Strahleinrichtung 118 weist Verbindungsschläuche auf, um der Strahldüse 120 Druckluft und festes Kohlenstoffdioxid zuzuführen.

Die Vorrichtung 100 weist eine portalartige Trageinrichtung 124 auf, durch die Fahrzeugbauteile 102 mithilfe der Transporteinrichtung 116 zur Reinigung hindurchgeführt werden können. Die Trageinrichtung 124 ist vorliegend gerüstartig aus Aluminiumprofilen mit einer Querstrebe ausgeführt.

Die Vorrichtung 100 weist einen Industrieroboter 126 zum automatisierten Führen der Strahldüse 120 auf. Der Industrieroboter 126 weist einen Manipulator und eine Steuereinrichtung auf und ist zum Reinigen von Klebeflächen der Fahrzeugbauteile 102 programmierbar. Die Strahldüse 120 ist an dem Manipulator angeordnet und dient als Effektor des Industrieroboters 126. Der Industrieroboter 126 ist hängend an der 124 Trageinrichtung angeordnet. Der Industrieroboter 126 ist zur Kollaboration mit einem Werker geeignet.

Die Vorrichtung 100 weist eine Ladungsableitungseinrichtung 128 mit einem Ionisator zum Beseitigen einer elektrostatischen Aufladung der Fahrzeugbauteile 102 auf. Die Ladungsableitungseinrichtung 128 ist in einer Transportrichtung a dem Industrieroboter 126 mit der Strahldüse 120 nachgeordnet und dient dazu, eine durch das Trockeneisstrahlen erfolgte elektrostatische Aufladung der Fahrzeugbauteile 102 zu beseitigen. Der Ionisator ist ein geregelter Ionisator, bei dem ein elektrisches Feld durch Messung und gezielte Nachstellung einer Hochspannung geregelt wird. Die Ladungsableitungseinrichtung 128 weist ein Gebläse auf, um ionisierte Luft auf die Fahrzeugbauteile 102 zu blasen.

Klebeflächen von Fahrzeugbauteilen 102 werden jeweils mit spezifisch angepassten Reinigungsparametern gereinigt. Die Reinigungsparameter werden jeweils hinsichtlich einer erzielbaren Haftkraft, einer Prozesszeit und/oder einer Wirtschaftlichkeit angepasst. Zum spezifischen Anpassen der Reinigungsparameter wird zunächst wechselnd jeweils ein Reinigungsparameter variiert, während die übrigen Reinigungsparameter unverändert bleiben, um jeweils einen optimalen Parameterwert zu ermitteln. Nachfolgend wird eine Kombination von Reinigungsparametern ausgewählt.

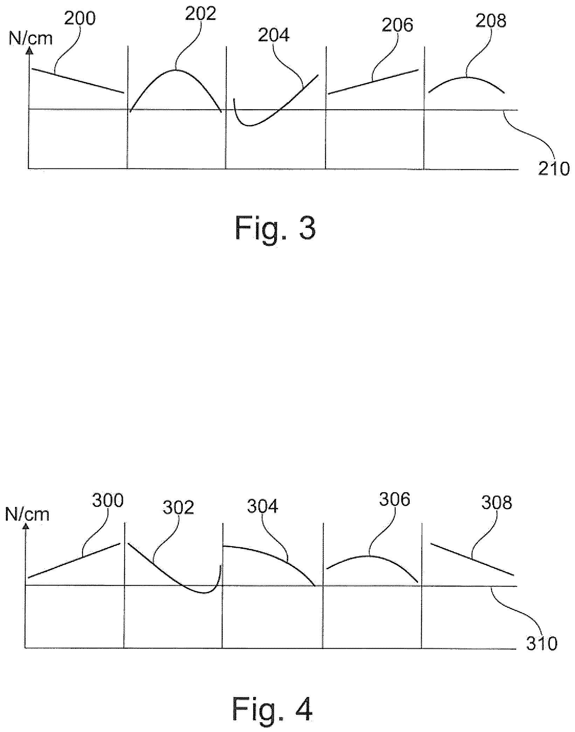

Fig. 3 zeigt ein spezifisches Anpassen von Reinigungsparametern für Klebeflächen von Fahrzeugbauteilen aus einer Metalllegierung, wie Stahl- oder Aluminiumlegierung, hinsichtlich einer Haltekraft.

In Fig. 3 ist eine jeweils erzielte Haltekraft in N/cm aufgetragen. Zum Bestimmen einer Haltekraft wird bei variierenden Reinigungsparametern jeweils auf eine gereinigte Klebefläche ein Materialstreifen aufgeklebt und in einem Schälversuch unter Messung der Haltekraft abgezogen.

Zunächst wird ein Abstand 200 einer Strahldüse von einer zu reinigenden Klebefläche variiert, während die übrigen Reinigungsparameter unverändert bleiben. Nachfolgend wird eine Bewegungsgeschwindigkeit 202 einer Strahldüse relativ zu einer zu reinigenden Klebefläche variiert, während die übrigen Reinigungsparameter unverändert bleiben. Nachfolgend wird ein Massestrom 204 von festem Kohlenstoffdioxid variiert, während die übrigen Reinigungsparameter unverändert bleiben. Nachfolgend wird ein Druck 206 zur Beschleunigung von festem Kohlenstoffdioxid variiert, während die übrigen Reinigungsparameter unverändert bleiben. Nachfolgend wird ein Winkel 208 zwischen einer Strahldüse und einer zu reinigenden Klebefläche variiert, während die übrigen Reinigungsparameter unverändert bleiben. Die einzelnen Parameter können auch in einer anderen Reihenfolge variiert werden.

Eine Referenzlinie 210 zeigt eine erzielte Haltekraft bei einer Reinigung einer Klebefläche mit Isopropanol. Es ist ersichtlich, dass sich bei einer Reinigung mithilfe von festem Kohlenstoffdioxid regelmäßig höhere Haltekräfte erzielen lassen, als bei einer Reinigung einer Klebefläche mit Isopropanol.

Fig. 4 zeigt ein spezifisches Anpassen von Reinigungsparametern für Klebeflächen von Fahrzeugbauteilen aus einem Faserverbundwerkstoff, wie karbonfaserverstärkter Kunststoff, hinsichtlich einer Haltekraft.

In Fig. 4 ist eine jeweils erzielte Haltekraft in N/cm aufgetragen. Zum Bestimmen einer Haltekraft wird bei variierenden Reinigungsparametern jeweils auf eine gereinigte Klebefläche ein Materialstreifen aufgeklebt und in einem Schälversuch unter Messung der Haltekraft abgezogen.

Zunächst wird ein Abstand 300 einer Strahldüse von einer zu reinigenden Klebefläche variiert, während die übrigen Reinigungsparameter unverändert bleiben. Nachfolgend wird eine Bewegungsgeschwindigkeit 302 einer Strahldüse relativ zu einer zu reinigenden Klebefläche variiert, während die übrigen Reinigungsparameter unverändert bleiben. Nachfolgend wird ein Massestrom 304 von festem Kohlenstoffdioxid variiert, während die übrigen Reinigungsparameter unverändert bleiben. Nachfolgend wird ein Druck 306 zur Beschleunigung von festem Kohlenstoffdioxid variiert, während die übrigen Reinigungsparameter unverändert bleiben. Nachfolgend wird ein Winkel 308 zwischen einer Strahldüse und einer zu reinigenden Klebefläche variiert, während die übrigen Reinigungsparameter unverändert bleiben. Die einzelnen Parameter können auch in einer anderen Reihenfolge variiert werden.

Eine Referenzlinie 310 zeigt eine erzielte Haltekraft bei einer Reinigung einer Klebefläche mit Isopropanol. Es ist ersichtlich, dass sich bei einer Reinigung mithilfe von festem Kohlenstoffdioxid regelmäßig höhere Haltekräfte erzielen lassen, als bei einer Reinigung einer Klebefläche mit Isopropanol.

### Bezugszeichen

- 100: Vorrichtung
- 102: Fahrzeugbauteil
- 104: Reinigungsraum
- 106: Seitenwand
- 108: Seitenwand
- 110: Decke
- 112: Zugang
- 114: Ausgang
- 116: Transporteinrichtung
- 118: Strahleinrichtung
- 120: Strahldüse
- 122: Speicher
- 124: Trageinrichtung
- 126: Industrieroboter
- 128: Ladungsableitungseinrichtung
- 200: Abstand
- 202: Bewegungsgeschwindigkeit
- 204: Massestrom
- 206: Druck
- 208: Winkel
- 210: Referenzlinie
- 300: Abstand
- 302: Bewegungsgeschwindigkeit
- 304: Massestrom
- 306: Druck
- 308: Winkel
- 310: Referenzlinie

## Patentansprüche

1. Verfahren zum automatisierten Reinigen von Klebeflächen von Fahrzeugbauteilen (102) mithilfe von festem Kohlenstoffdioxid in einer Montagelinie mit mehreren Arbeitsstationen, wobei die Klebeflächen mit hinsichtlich einer erzielbaren Haftkraft, einer Prozesszeit und/oder einer Wirtschaftlichkeit spezifisch angepassten Reinigungsparametern gereinigt werden, wobei zum spezifischen Anpassen der Reinigungsparameter zunächst wechselnd jeweils ein Reinigungsparameter variiert wird, während die übrigen Reinigungsparameter unverändert bleiben, um jeweils einen optimalen Parameterwert zu ermitteln, und nachfolgend wird eine Kombination von Reinigungsparametern ausgewählt, wobei
- zum haltekraftoptimierten Reinigen von Klebeflächen von Fahrzeugbauteilen (102) aus einer lackierten Metalllegierung, wie Stahl- oder Aluminiumlegierung, ein Abstand (200, 300) einer Strahldüse (120) von einer zu reinigenden Klebefläche frei gewählt wird, eine Strahldüse (120) relativ zu einer zu reinigenden Klebefläche mit einer Geschwindigkeit (202, 302) von ca. 45mm/s bis ca. 55mm/s, insbesondere von ca. 50mm/s, bewegt wird, ein Massestrom (204, 304) von festem Kohlenstoffdioxid von ca. 30kg/h bis ca. 40kg/h, insbesondere von ca. 35kg/h, eingestellt wird, ein Druck (206, 306) zur Beschleunigung von festem Kohlenstoffdioxid von ca. 5bar bis ca. 7bar, insbesondere von ca. 6bar, eingestellt wird und ein Winkel (208, 308) zwischen einer Strahldüse (120) und einer zu reinigenden Klebefläche von ca. 62,5° bis ca. 72,5°, insbesondere von ca. 67,5°, eingestellt wird,
- zum haltekraftoptimierten Reinigen von Klebeflächen von Fahrzeugbauteilen (102) aus einem Faserverbundwerkstoff, wie karbonfaserverstärkter Kunststoff, ein Abstand (200, 300) einer Strahldüse (120) von einer zu reinigenden Klebefläche auf ca. 60mm bis ca. 70mm, insbesondere auf ca. 65mm, eingestellt wird, eine Strahldüse (120) relativ zu einer zu reinigenden Klebefläche mit einer Geschwindigkeit (202, 302) von ca. 20mm/s bis ca. 30mm/s, insbesondere von ca. 25mm/s, bewegt wird, ein Massestrom (204, 304) von festem Kohlenstoffdioxid von ca. 15kg/h bis ca. 25kg/h, insbesondere von ca. 20kg/h, eingestellt wird, ein Druck (206, 306) zur Beschleunigung von festem Kohlenstoffdioxid von ca. 3,5bar bis ca. 5,5bar, insbesondere von ca. 4,5bar, eingestellt wird und ein Winkel (208, 308) zwischen einer Strahldüse (120) und einer zu reinigenden Klebefläche von ca. 10° bis ca. 20°, insbesondere von ca. 15°, eingestellt wird,
- zum prozesszeit- und/oder wirtschaftlich optimierten Reinigen von Klebeflächen von Fahrzeugbauteilen (102) aus einer lackierten Metalllegierung, wie Stahl- oder Aluminiumlegierung, ein Abstand (200, 300) einer Strahldüse (120) von einer zu reinigenden Klebefläche frei gewählt wird, eine Strahldüse (120) relativ zu einer zu reinigenden Klebefläche mit einer Geschwindigkeit (202, 302) von ca. 70m/s bis ca. 80mm/s, insbesondere von ca. 75mm/s, bewegt wird, ein Massestrom (204, 304) von festem Kohlenstoffdioxid von ca. 10kg/h bis ca. 20kg/h, insbesondere von ca. 15kg/h, eingestellt wird, ein Druck (206, 306) zur Beschleunigung von festem Kohlenstoffdioxid von ca. 5bar bis ca. 7bar, insbesondere von ca. 6bar, eingestellt wird und ein Winkel (208, 308) zwischen einer Strahldüse (120) und einer zu reinigenden Klebefläche von ca. 55° bis ca. 65°, insbesondere von ca. 60°, eingestellt wird oder
- zum prozesszeit- und/oder wirtschaftlich optimierten Reinigen von Klebeflächen von Fahrzeugbauteilen (102) aus einem Faserverbundwerkstoff, wie karbonfaserverstärkter Kunststoff, ein Abstand (200, 300) einer Strahldüse (120) von einer zu reinigenden Klebefläche auf ca. 60mm bis ca. 70mm, insbesondere auf ca. 65mm, eingestellt wird, eine Strahldüse (120) relativ zu einer zu reinigenden Klebefläche mit einer Geschwindigkeit (202, 302) von ca. 30mm/s bis ca. 40mm/s, insbesondere von ca. 35mm/s, bewegt wird, ein Massestrom (204, 304) von festem Kohlenstoffdioxid von ca. 10kg/h bis ca. 20kg/h, insbesondere von ca. 15kg/h, eingestellt wird, ein Druck (206, 306) zur Beschleunigung von festem Kohlenstoffdioxid von ca. 3,5bar bis ca. 5,5bar, insbesondere von ca. 4,5bar, eingestellt wird und ein Winkel (208, 308) zwischen einer Strahldüse (120) und einer zu reinigenden Klebefläche von ca. 80° bis ca. 90°, insbesondere von ca. 85°, eingestellt wird.

2. Verfahren nach Anspruch 1, **dadurch gekennzeichnet, dass** Klebeflächen von beschichteten und/oder lackierten Fahrzeugbauteilen (102) gereinigt werden.

3. Verfahren nach wenigstens einem der vorhergehenden Ansprüche, **dadurch gekennzeichnet, dass** Klebeflächen von Fahrzeugbauteilen (102) aus einer Metalllegierung, wie Stahl- oder Aluminiumlegierung, und/oder aus einem Faserverbundwerkstoff, wie karbonfaserverstärkter Kunststoff, gereinigt werden.

4. Verfahren nach wenigstens einem der vorhergehenden Ansprüche, **dadurch gekennzeichnet, dass** zum Reinigen von Klebeflächen von Fahrzeugbauteilen (102) wenigstens einer der folgenden Reinigungsparameter spezifisch angepasst wird: Abstand (200, 300) einer Strahldüse (120) von einer zu reinigenden Klebefläche; Bewegungsgeschwindigkeit (202, 302) einer Strahldüse (120) relativ zu einer zu reinigenden Klebefläche; Massestrom (204, 304) von festem Kohlenstoffdioxid; Druck (206, 306) zur Beschleunigung von festem Kohlenstoffdioxid; Winkel (208, 308) zwischen einer Strahldüse (120) und einer zu reinigenden Klebefläche.

## Claims

1. Method for automated cleaning of adhesive surfaces of vehicle components (102) using solid carbon dioxide in an assembly line with several work stations, wherein the adhesive surfaces are cleaned with cleaning parameters specifically adapted in terms of an achievable adhesion force, a processing time and/or an economy, wherein, for the specific adaptation of the cleaning parameters, firstly, alternately, in each case one cleaning parameter is varied while the other cleaning parameters remain unchanged, in order to determine a respective optimum parameter value, and subsequently a combination of cleaning parameters is selected, wherein
- for the holding-force-optimized cleaning of adhesive surfaces of vehicle components (102) composed of a painted metal alloy, such as steel or aluminium alloy, a spacing (200, 300) of a blasting nozzle (120) from an adhesive surface for cleaning is freely selected, a blasting nozzle (120) is moved relative to an adhesive surface for cleaning with a speed (202, 302) of approximately 45 mm/s to approximately 55 mm/s, in particular of approximately 50 mm/s, a mass flow (204, 304) of solid carbon dioxide of approximately 30 kg/h to approximately 40 kg/h, in particular of approximately 35 kg/h is set, a pressure (206, 306) for accelerating solid carbon dioxide of approximately 5 bar to approximately 7 bar, in particular of approximately 6 bar, is set, and an angle (208, 308) between a blasting nozzle (120) and an adhesive surface for cleaning of approximately 62.5° to approximately 72.5°, in particular of approximately 67.5°, is set,
- for the holding-force-optimized cleaning of adhesive surfaces of vehicle components (102) composed of a fibre composite material, such as carbon-fibre-reinforced plastic, a spacing (200, 300) of a blasting nozzle (120) from an adhesive surface for cleaning is set to approximately 60 mm to approximately 70 mm, in particular to approximately 65 mm, a blasting nozzle (120) is moved relative to an adhesive surface for cleaning with a speed (202, 302) of approximately 20 mm/s to approximately 30 mm/s, in particular of approximately 25 mm/s, a mass flow (204, 304) of solid carbon dioxide of approximately 15 kg/h to approximately 25 kg/h, in particular of approximately 20 kg/h is set, a pressure (206, 306) for accelerating solid carbon dioxide of approximately 3.5 bar to approximately 5.5 bar, in particular of approximately 4.5 bar, is set, and an angle (208, 308) between a blasting nozzle (120) and an adhesive surface for cleaning of approximately 10° to approximately 20°, in particular of approximately 15°, is set,
- for the process-time-optimized and/or economically optimized cleaning of adhesive surfaces of vehicle components (102) composed of a painted metal alloy, such as steel or aluminium alloy, a spacing (200, 300) of a blasting nozzle (120) from an adhesive surface for cleaning is freely selected, a blasting nozzle (120) is moved relative to an adhesive surface for cleaning with a speed (202, 302) of approximately 70 mm/s to approximately 80 mm/s, in particular of approximately 75 mm/s, a mass flow (204, 304) of solid carbon dioxide of approximately 10 kg/h to approximately 20 kg/h, in particular of approximately 15 kg/h is set, a pressure (206, 306) for accelerating solid carbon dioxide of approximately 5 bar to approximately 7 bar, in particular of approximately 6 bar, is set, and an angle (208, 308) between a blasting nozzle (120) and an adhesive surface for cleaning of approximately 55° to approximately 65°, in particular of approximately 60°, is set, or
- for the process-time-optimized and/or economically optimized cleaning of adhesive surfaces of vehicle components (102) composed of a fibre composite material, such as carbon-fibre-reinforced plastic, a spacing (200, 300) of a blasting nozzle (120) from an adhesive surface for cleaning is set to approximately 60 mm to approximately 70 mm, in particular to approximately 65 mm, a blasting nozzle (120) is moved relative to an adhesive surface for cleaning with a speed (202, 302) of approximately 30 mm/s to approximately 40 mm/s, in particular of approximately 35 mm/s, a mass flow (204, 304) of solid carbon dioxide of approximately 10 kg/h to approximately 20 kg/h, in particular of approximately 15 kg/h is set, a pressure (206, 306) for accelerating solid carbon dioxide of approximately 3.5 bar to approximately 5.5 bar, in particular of approximately 4.5 bar, is set, and an angle (208, 308) between a blasting nozzle (120) and an adhesive surface for cleaning of approximately 80° to approximately 90°, in particular of approximately 85°, is set.

2. Method according to Claim 1, **characterized in that** adhesive surfaces of coated and/or painted vehicle components (102) are cleaned.

3. Method according to at least either one of the preceding claims, **characterized in that** adhesive surfaces of vehicle components (102) composed of a metal alloy, such as steel or aluminium alloy, and/or composed of a fibre composite material, such as carbon-fibre-reinforced plastic, are cleaned.

4. Method according to at least one of the preceding claims, **characterized in that**, for the cleaning of adhesive surfaces of vehicle components (102), at least one of the following cleaning parameters is specifically adapted: a spacing (200, 300) of a blasting nozzle (120) from an adhesive surface for cleaning; a movement speed (202, 302) of a blasting nozzle (120) relative to an adhesive surface for cleaning; a mass flow (204, 304) of solid carbon dioxide; a pressure (206, 306) for accelerating solid carbon dioxide; an angle (208, 308) between a blasting nozzle (120) and an adhesive surface for cleaning.

## Revendications

1. Procédé de nettoyage automatisé de surfaces de collage de composants de véhicule (102) au moyen de dioxyde de carbone solide dans une ligne de montage comprenant plusieurs postes de travail, les surfaces de collage étant nettoyées avec des paramètres de nettoyage spécifiquement adaptés en ce qui concerne une force d'adhérence réalisable, un temps de processus et/ou une rentabilité, un paramètre de nettoyage respectif étant tout d'abord modifié en alternance pour l'adaptation spécifique des paramètres de nettoyage, tandis que les autres paramètres de nettoyage restent inchangés, afin de déterminer respectivement une valeur de paramètre optimale, et une combinaison de paramètres de nettoyage étant ensuite sélectionnée, selon lequel
- pour le nettoyage, optimisé quant à la force de maintien, de surfaces de collage de composants de véhicule (102) à base d'un alliage métallique peint, tel qu'un alliage d'acier ou d'aluminium, une distance (200, 300) entre une buse de projection (120) et une surface de collage à nettoyer est librement choisie, une buse de projection (120) est déplacée, par rapport à une surface de collage à nettoyer, à une vitesse (202, 302) d'environ 45 mm/s à environ 55 mm/s, en particulier d'environ 50 mm/s, un débit massique (204, 304) de dioxyde de carbone solide d'environ 30 kg/h à environ 40 kg/h, en particulier d'environ 35 kg/h, est réglé, une pression (206, 306) pour l'accélération de dioxyde de carbone solide d'environ 5 bars à environ 7 bars, en particulier d'environ 6 bars, est réglée et un angle (208, 308) d'environ 62,5° à environ 72,5°, en particulier d'environ 67,5°, entre une buse de projection (120) et une surface de collage à nettoyer, est réglé,
- pour le nettoyage, optimisé quant à la force de maintien, de surfaces de collage de composants de véhicule (102) à base d'un matériau composite fibreux, tel qu'une matière plastique renforcée par des fibres de carbone, une distance (200, 300) entre une buse de projection (120) et une surface de collage à nettoyer est réglée à environ 60 mm à environ 70 mm, en particulier à environ 65 mm, une buse de projection (120) est déplacée, par rapport à une surface de collage à nettoyer, à une vitesse (202, 302) d'environ 20 mm/s à environ 30 mm/s, en particulier d'environ 25 mm/s, un débit massique (204, 304) de dioxyde de carbone solide d'environ 15 kg/h à environ 25 kg/h, en particulier d'environ 20 kg/h, est réglé, une pression (206, 306) pour l'accélération du dioxyde de carbone solide d'environ 3,5 bars à environ 5,5 bars, en particulier d'environ 4,5 bars, est réglée et un angle (208, 308) d'environ 10° à environ 20°, en particulier d'environ 15°, entre une buse de projection (120) et une surface de collage à nettoyer, est réglé,
- pour le nettoyage, optimisé quant au temps de processus et/ou à la rentabilité, de surfaces de collage de composants de véhicule (102) à base d'un alliage métallique peint, tel qu'un alliage d'acier ou d'aluminium, une distance (200, 300) entre une buse de projection (120) et une surface de collage à nettoyer est librement choisie, une buse de projection (120) est déplacée, par rapport à la surface de collage à nettoyer, à une vitesse (202, 302) d'environ 70 m/s à environ 80 mm/s, en particulier d'environ 75 mm/s, un débit massique (204, 304) de dioxyde de carbone solide d'environ 10 kg/h à environ 20 kg/h, en particulier d'environ 15 kg/h, est réglé, une pression (206, 306) pour l'accélération de dioxyde de carbone solide d'environ 5 bars à environ 7 bars, en particulier d'environ 6 bars, est réglée et un angle (208, 308) d'environ 55° à environ 65°, en particulier d'environ 60°, entre une buse de projection (120) et la surface de collage à nettoyer, est réglé,
- pour le nettoyage, optimisé quant au temps de processus et/ou à la rentabilité, de surfaces de collage de composants de véhicule (102) à base d'un matériau composite fibreux, tel qu'une matière plastique renforcée par des fibres de carbone, une distance (200, 300) entre une buse de projection (120) et une surface de collage à nettoyer est réglée à environ 60 mm à environ 70 mm, en particulier à environ 65 mm, une buse de projection (120) est déplacée, par rapport à une surface de collage à nettoyer, à une vitesse (202, 302) d'environ 30 mm/s à environ 40 mm/s, en particulier d'environ 35 mm/s, un débit massique (204, 304) de dioxyde de carbone solide d'environ 10 kg/h à environ 20 kg/h, en particulier d'environ 15 kg/h, est réglé, une pression (206, 306) pour l'accélération de dioxyde de carbone solide d'environ 3,5 bars à environ 5,5 bars, en particulier d'environ 4,5 bars, est réglée et un angle (208, 308) d'environ 80° à environ 90°, en particulier d'environ 85°, entre une buse de projection (120) et la surface de collage à nettoyer, est réglé.

2. Procédé selon la revendication 1, **caractérisé en ce que** des surfaces de collage de composants de véhicule (102) revêtus et/ou peints sont nettoyées.

3. Procédé selon au moins l'une des revendications précédentes, **caractérisé en ce que** des surfaces de collage de composants de véhicule (102) à base d'un alliage métallique, tel qu'un alliage d'acier ou d'aluminium, et/ou à base d'un matériau composite fibreux, tel qu'une matière plastique renforcée par des fibres de carbone, sont nettoyées.

4. Procédé selon au moins l'une des revendications précédentes, **caractérisé en ce que**, pour le nettoyage de surfaces de collage de composants de véhicule (102), au moins l'un des paramètres de nettoyage suivants est spécifiquement adapté : la distance (200, 300) entre une buse de projection (120) et une surface de collage à nettoyer ; la vitesse de déplacement (202, 302) d'une buse de projection (120) par rapport à une surface de collage à nettoyer ; le débit massique (204, 304) de dioxyde de carbone solide ; la pression (206, 306) pour l'accélération de dioxyde de carbone solide ; l'angle (208, 308) entre une buse de projection (120) et une surface de collage à nettoyer.
